# EUROPEAN PATENT APPLICATION

(11) **EP 0 656 305 A2**
(43) Date of publication of application: **07.06.1995**
(21) Application number: 94118653.8
(22) Date of filing: 28.11.1994
(51) Int. Cl.: B65G 33/04, B65G 33/34

(54) **Device for feeding and discharging of bottles into and from working carousels**

(30) Priority: 03.12.1993 IT BO930488
(71) Applicant: I.M.A. INDUSTRIA MACCHINE AUTOMATICHE S.p.A., I-40064 Ozzano dell'Emilia (IT)
(72) Inventor: Barbieri, Claudio, I-40139 Bologna (IT); Trebbi, Claudio, I-40059 Medicina (IT)
(74) Representative: Porsia, Attilio, Dr.

(57) **Abstract**

The auxiliary screw (205) is actuated by means of a motor (47) with electronic control, equipped with speed and phase transducers (147) connected to a logic unit (50-51-52-53) which by means of suitable transducers (146) notes the speed and the phase of any point of the kinematic chain which transmits the movement to the working carousel and to the main screw (105). In order cyclically to create a space in the main screw, the logic unit makes provision to slow down and then reaccelerate the motor of the auxiliary screw in such a manner that this screw is dephased by a complete revolution every two revolutions of the main screw and then resumes, at the end of the two revolutions, the speed and the phase of the main screw. Also described is the use of such a double-screw device (500), with synchro-tie, for controlling the flow of bottles leaving a working carousel, to bring about the rejection of any bottles which are not correctly filled or with other defects.

## Description

To control the flow of small bottles, bottles or other containers which have to be fed in phase to a working carousel, it is known to use at least one screw which is positioned tangentially to the carousel, actuated in phase with the carousel itself and interchangeable according to the ranges of the shapes of the bottles. The screw is positioned laterally to the flow of bottles, is screwed onto the same and with its own helix causes the same bottles to proceed with the speed and with the pitch necessary for feeding in phase to the working carousel. When it is necessary to stop the flow of bottles fed to the carousel, on the occurrence of certain operative conditions as a result of which the carousel itself has to remain in operation, it is known to use a feed device consisting of a screw divided into two pieces which are positioned one immediately following the other and normally rotate in the same direction and at the same speed and in which the thread of the helix of the first piece of screw is aligned with that of the second piece of screw so that the bottles pass with continuity from one screw to the other screw and arrive at the working carousel. In the following account, the screw which interacts directly with the working carousel will be termed the main screw while the other, which is outside the plan dimensions of the carousel, will be termed the auxiliary screw. When it is necessary to stop the flow of bottles, the auxiliary screw is stopped while the main screw continues to rotate in phase with the carousel. When the feed of bottles has to be restarted, the auxiliary screw is reactuated only when the thread of its helix is aligned with that of the main screw. This solution means that when the flow of bottles stops, the auxiliary screw remains full of bottles so that the subsequent starting of the same presents no problems. A device of this type is described in the Jagemberg Italian Patent no. 1,153,149, in which the same device is indicated for coupling to labelling machines. Devices of this type have recently also been used in bottle-filling machines for cyclically creating in the main screw spaces which are necessary for leaving empty a corresponding station in a carousel intended for transferring the bottles to a filling carousel so as to be capable of cyclically extracting from and then reinserting into the same transfer carousel a bottle, the tare of which is noted. This procedure is repeated with such a flow that the empty bottles, weighed, are fed in succession to all the stations of the filling carousel so that then, by checking samples at the same flow to determine the gross weight of the bottles which have emerged from the filling carousel, during transfer to a successive corking carousel, it is possible to note the weight of the product distributed by said stations of the filling carousel in order to be capable of effecting any necessary adjustment operations of the dosing devices and any necessary rejection of bottles which are not correctly filled, or any other emergency action. In both the first and the second case, the auxiliary screw of the known systems receives its rotation from the means which actuate the main screw and the working carousels, with the interposition of a mono-turn control coupling or of a dog clutch or of an equivalent device, equipped with a brake, which brings about the rotary coupling between the two screws only when the thread of the helix of one screw is aligned with that of the other.

When such a solution is adopted in a packaging machine for medicinal, cosmetic or food products, which have to be handled in a sterile environment, the cyclical and sudden stopping of the auxiliary screw causes the following disadvantages:
- it may lead to the breakage of the bottles if made of glass or other delicate material;
- the stopped bottles may become disarranged and create problems in the subsequent reactuation of the auxiliary screw;
- there is attrition and consequent friction of considerable intensity between the auxiliary screw and the stopped bottles and between these and the feed line conveyor underneath, with production of particles which may pollute the product introduced into the bottles;
- there are rough disturbances of the laminar flow of sterile air which is made to circulate in the box containing the machine which fills and closes the bottles, with a consequent drop in efficiency of this type of protection.

The invention aims to eliminate these and other disadvantages with the following solution idea. The auxiliary screw is actuated by means of a motor with electronic control, equipped with speed and phase transducers connected to a logic unit which, by means of suitable transducers, also notes the speed and the phase of any point of the kinematic chain which transmits the movement to the working carousels and to the main screw. In order cyclically to create a space in the main screw, the logic unit just mentioned makes provision to slow down and then reaccelerate the motor of the auxiliary screw, passing through zero velocity or not, so that this screw is dephased by a complete revolution every two revolutions of the main screw and then resumes, at the end of the two revolutions, the speed and the phasing of the same main screw. According to a preferred embodiment of the invention, the auxiliary screw is actuated by a brushless motor or a motor of equivalent type, and the kinematic chain which transmits the rotation to the working carousels and to the main screw is actuated by an asynchronous motor equipped with inverter and with speed and phase transducers.

In the present patent application, a description is also given of the use of such a double-screw device, with synchro-tie , for controlling the flow of bottles at the exit of a working carousel, for example of a corking carousel, to bring about the rejection of bottles which are not correctly filled and/or closed or with other defects.

These and other characteristics of the invention, and the advantages which derive therefrom, will be evident from the following description of a preferred embodiment of the same, illustrated simply by way of non-limiting example, in the figures of the four plates of drawings attached, in which:
- Fig. 1 is a plan view from above of the device with a double screw which controls the flow of bottles at the entrance of a working carousel;
- Fig. 2 illustrates the device in Figure 1 in longitudinal cross-section and with parts visible;
- Fig. 3 illustrates a speed/time diagram relating to the functioning of the device in the preceding figures;
- Fig. 4 illustrates constructional details of the device in Figure 1 in transverse cross-section through the line IV-IV;
- Fig. 5 is a diagrammatic plan view from above of the device with a double screw which acts on the exit of a working carousel and which is capable of rejecting defective bottles;
- Fig. 6 illustrates in plan view a detail of functioning of the device in Figure 5.

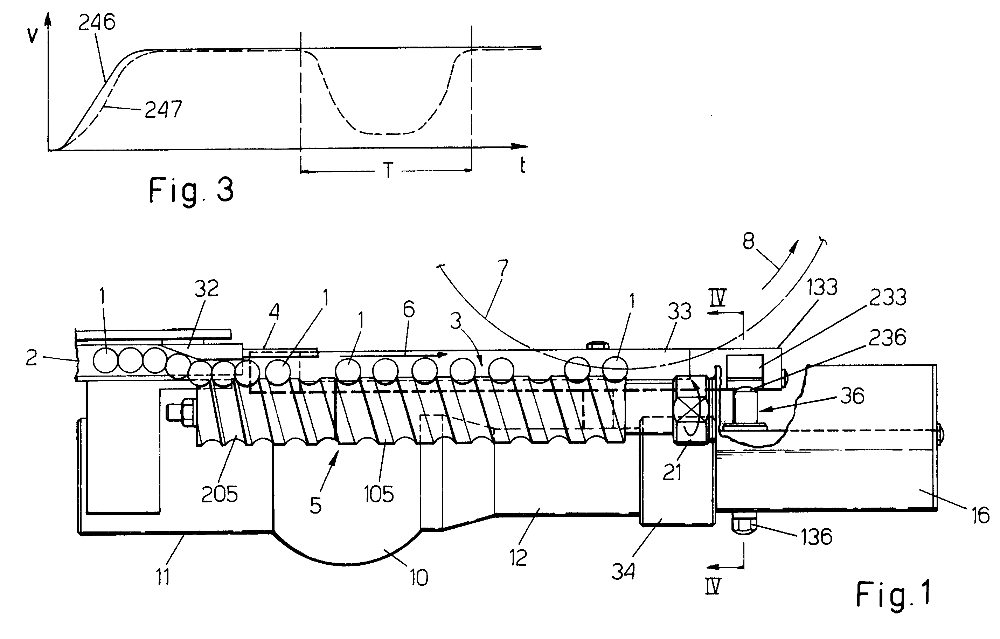

From Figure 1, it can be seen that the empty bottles 1 are conveyed in indian file from a transport line 2 into a rectilinear flow channel 3 where the bottles themselves are controlled on one side by guides 4 and on the other side by a double-screw system 5 which has the function of advancing the bottles in the direction of the arrow 6 with such a speed, pitch and rate that they can be taken in phase by the angularly equidistant stations of a working carousel 7 which rotates in the direction indicated by the arrow 8.

From Figures 1-2, it can be seen that, on the external side and in the end part of the feed line 2, there is fixed to the base 9 of the machine, a vertical and hollow column 10 which is closed at the top and which supports on the one hand the end components 11 of said line 2 and on the other hand supports in a cantilevered manner a horizontal tube 12 which is parallel to the longitudinal axis of the same line 2. Mounted coaxially and rotatably in the tube 12, by means of the bearings 13, is a hollow shaft 14, on the end section of which projecting from the tube itself there is mounted rotatably by means of the bearings 15 a short arm 16 which in turn, by means of bearings 17, supports rotatably a hollow shaft 18 which is positioned laterally and parallel to said tube 12 and on which is mounted and keyed by means of the key 19 the main screw 105 of the system 5, which is made of suitable plastic material and equipped with a metal core which ends in the region of the arm 16 with a threaded section 20 on which is screwed a ring nut 21 which is rotatable in an external annular seat of the hollow shaft 18 for the axial retention of the same main screw. Mounted rotatably by means of bearings 22 in the hollow shaft 18 is a shaft 23 which projects in the direction of the transport line 2 with a section on which is broached at 24 a hub 25 with an external diameter not greater than the internal diameter of said hollow shaft 18 and on which the auxiliary screw 205 of the system 5, which is also made of suitable plastic material and provided with a metal core, is keyed by means of the key 26. The hub 25 ends with a tapered and axially hollow part which is closed by a plug 27 through which there passes axially a push button 28 equipped with a mushroom head 128 on which a spring 29 acts, which presses the push button towards the outside and which forces the head 128 to interact by means of its own conical profile with one or more small spheres 30 which project for a suitable distance through small lateral holes in the cavity of the hub 25 and which interact with one end of an annular recess 31 in the core of the auxiliary screw 205 for the axial retention of this component. To dismantle the two screws, the push button 28 is pressed and the spheres 30 are thus neutralized, as a result of which it is possible to slip off the screw 205. Subsequently, the ring nut 21 is unscrewed and the main screw 105 is slipped off. Assembly of the screws is carried out by the reverse operations, which are just as simple and fast.

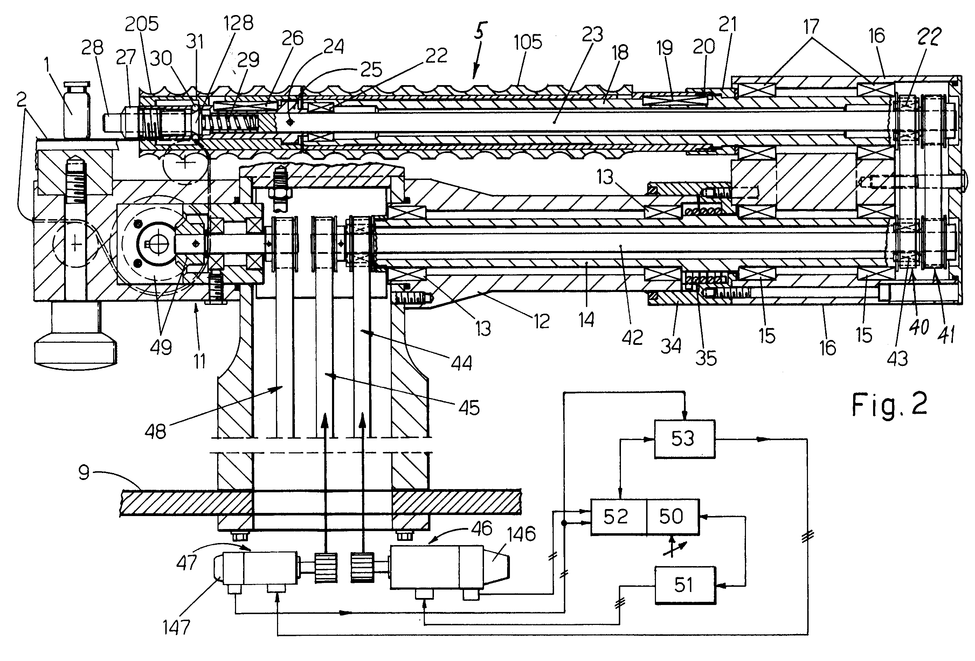

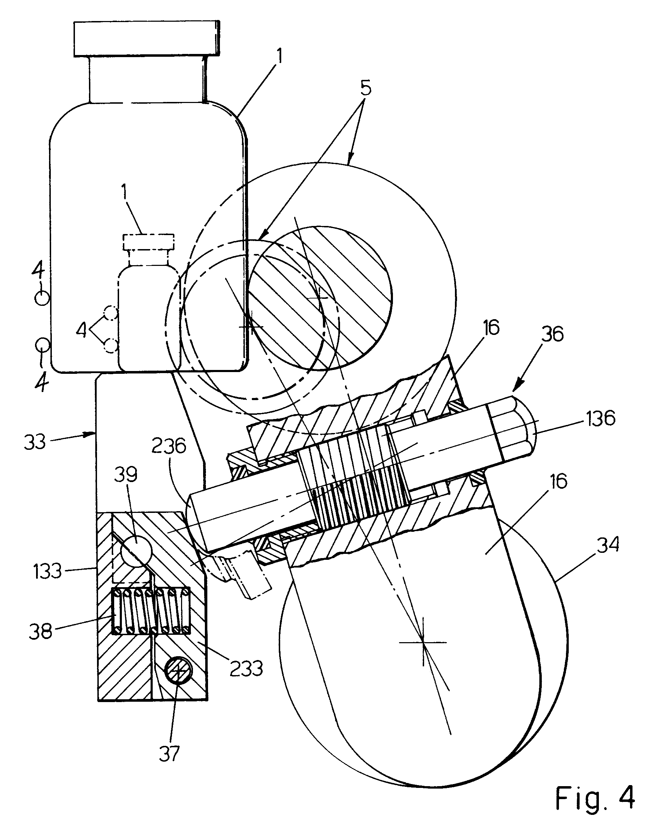

In the end part of the transport line 2 (Fig. 1), the bottles 1 are preferably deflected towards the auxiliary screw 205 by a lateral inclined guide 32 and then pass into the rectilinear and horizontal flow channel 3 which is defined at the bottom by a guide 33 fixed laterally to the column 10. The guide 33 is preferably covered on the top with suitable plastic material and its longitudinal central axis is tangential to the orbit of rotation of the grippers of the carousel 7. The distance of the double screw 5 from the flow channel 3 of the bottles must be capable of being modified to suit different sizes of bottles which in Figure 4 are illustrated in the minimum size (in broken lines) and in the maximum size (with continuous marking). From Figure 2, it can be seen that fixed on the arm 16 is a collar 34 which defines with the end of the tube 12, which it covers in part, an annular seat in which is accommodated a needle spring 35 which is anchored with the two ends to the parts 34-12 and stresses the arm 16 with the screws in the direction of the flow channel 3. Screwed onto the arm 16 (Figs 1-4) is a push rod 36, one end 136 of which is designed for rotational actuation with suitable means while the other end 236 is suitably rounded and interacts with a suitably tapered extension 133 of the guide 33. By decreasing the projection of the end 236 of the push rod from the arm 16, the distance of the double screw from the channel 3 is decreased, and vice versa. The action of the spring 35 is preferably contained within such limits that, if the advance of the bottles in the channel 3 jams, the double screw 5 can react with an elastic shift towards the outside, protecting the bottles from breakages. If this state comes about, safety means are preferably provided, which signal it and which in the example of Figure 4 comprise a part 233 on which the push rod 36 rests and which is pivoted at 37 on the part 133 and is stressed to move away from this by a spring 38. Provided between the parts 133 and 233 is a seat engaged by an electric impedance sensor 39 which notes and signals any moving away of the mobile part 233 on the occurrence of the problem just mentioned.

It can be seen from Figure 2 that the ends of the hollow shaft 18 and of the shaft 23 which project into a suitable seat of the arm 16 are connected by means of respective movement transmissions 40-41 of positive type, for example with belt and toothed pulleys, to the corresponding ends of the hollow shaft 14 and of a shaft 42 mounted coaxially therein and rotatably by means of bearings 43. The opposite ends of the shafts 14-42, which project into the hollow column 10, are connected by means of respective positive transmissions 44-45 respectively to any ring of the kinematic chain which actuates the working carousel and which is moved by an electric motor 46 with speed and phase transducers, and to a motor 47 with electronic control, for example of the type known commercially by the brand Brushless or equivalent. Also accommodated in the hollow column 10 is a positive transmission 48 connected to a motor (not illustrated) which actuates the transport line 2 by means of the bevel gear pair 49. 146 and 147 indicate the groups of speed and angular position or phase transducers of the motors 46-47. 50 indicates the electronic unit which, by means of the actuating unit 51, makes it possible to modify the functioning parameters of the motor 46 and which also controls the cyclical phases of acceleration and deceleration of the motor 47, being to this end connected to an electronic unit with a microprocessor 52 which receives in input the information relating to the speed and to the phase of the motors 46-47 and which, by means of an actuating unit 53, keeps the motor 47 under control with respect to the motor 46, verifying the correctness of their following and phasing during the entire cycle of functioning of the machine. The information relating to the speed and the phasing of the motor 46 is fed directly to the unit 53 in order to carry out any corrections in feedback.

Every time the machine starts from being stopped, the motor 47 follows the rotation of the motor 46 and synchronizes with it, both in speed and in phase. In this state, the thread of the helix of the auxiliary screw 205 is perfectly aligned with that of the main screw 105, as a result of which the bottles pass from one screw to the other with continuity. When the formation of spaces is required in the screw 105, a command is sent from the unit 50 which, as illustrated in the curves 246-247 of the speed/time diagram in Figure 3 relating to the motors 46-47, makes the motor 47 slow down and subsequently reaccelerate in such a manner that it is dephased by one complete revolution in the total time T corresponding to two revolutions which the motor 46 transmits to the main screw 105, at the end of which the motor 47 resumes the phase and the speed of the motor 46, with consequent alignment and synchronization of the screw 205 with the screw 105. The curve 247 of deceleration/acceleration of the motor 47, contrary to what is illustrated in Figure 3, can pass through zero velocity, also guaranteeing in this case an actuation of the auxiliary screw 205 without the disadvantages which are encountered in the known solutions.

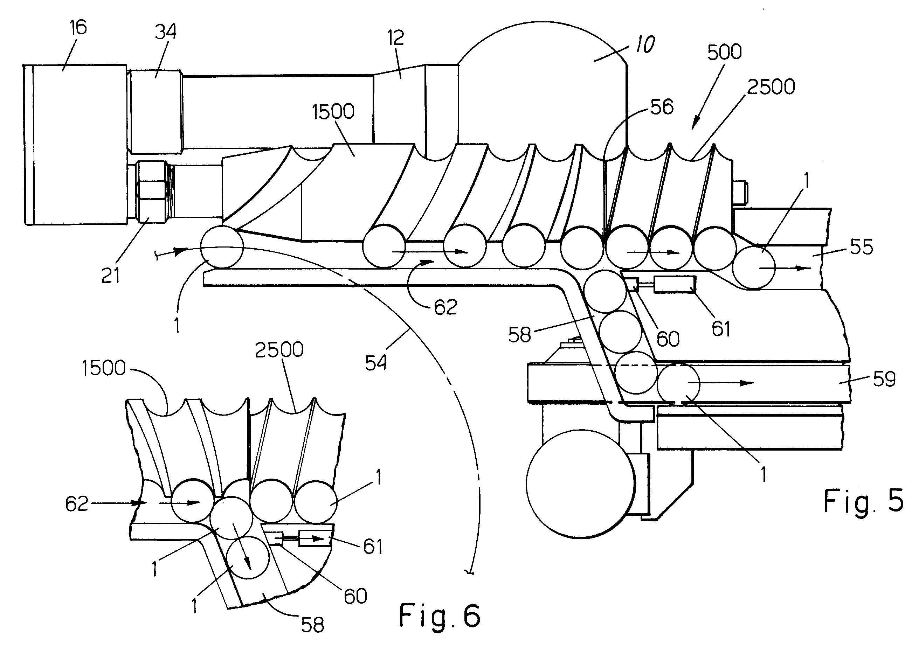

With reference to Figure 5, it can be seen that the double screw 500 which controls the bottles at the exit of a working carousel 54, for example for corking, is in design the same as that at the entrance already considered. 1500 indicates the main screw which interacts with the corking carousel 54 and which rotates continuously and in phase with said carousel, while 2500 indicates the auxiliary screw which has to decelerate and accelerate cyclically, in this case preferably passing through zero velocity, and which to this end is connected to a motor with electronic control similar to that 47 of the double-screw entrance system 5. Under the control of the double screw 500, the correctly filled and closed bottles are channelled towards the transport and removal line 55.

If one of the bottles controlled by the exit double screw has to be rejected, when said bottle is about to arrive in the region of said junction zone 56 of the two screws, the auxiliary screw 2500 is decelerated and stopped so as to stop the advance of said bottle which is first shifted laterally and towards the outside, by the thread of the helix of the main screw 1500, and which is then finally inserted into the oblique channel 58 by the thrust of the next bottle, as illustrated in the detail of Figure 6. The bottle which has been rejected by the screw 1500 and inserted into the oblique channel 58 is retained in the latter by a small presser 60, actuated for example by a small electromagnet 61, in such a manner that the same bottle ensures continuity of lateral guidance to the flow channel 62 for the transit of the successive correctly filled and closed bottles when, after the expulsion considered above, the auxiliary screw 2500 starts rotating again at the same speed and in phase with the main screw 1500. The electromagnet 61 is de-energized before the next phase of expulsion of a defective bottle. The channel 58 flows into the second transport and removal path 59 reserved for defective bottles.

It is understood that the description relates to a preferred embodiment of the invention, to which numerous variations and modifications, in particular constructional, can be made without abandoning the guiding principle of the invention, as explained above, as illustrated and as claimed below. In the claims which follow, the references given within brackets have the sole purpose of facilitating reading of said claims and therefore must not in any way be interpreted restrictively as far as the scope of protection of the same claims is concerned.

## Claims

1. Device for feeding and for discharging bottles into and from working carousels, of the type which comprises at least two screws which are positioned one immediately following the other and one of which constitutes the normal continuation of the other, the threads of the helices of the two screws normally being aligned with one another and the two screws normally being actuated in the same direction and at the same speed, and of the type in which, on the occurrence of certain operative conditions, the screw which interacts with the carousel, called the main screw in the following, continues to rotate at the normal speed while the other screw, called the auxiliary screw in the following, is actually stopped to interrupt the flow of bottles controlled by it, and is then reactuated in synchronism and in phase with the same main screw when the flow of bottles is to proceed normally, the device of such a type being characterized in that the main screw (105-1500) is connected to the kinematic chain of the carousel while the auxiliary screw (205-2500) is actuated by an electric motor (47), the speed and the phase of which can be controlled electronically by means of suitable transducers (147) which are connected to programmable electronic circuits (50-51-52-53) and also note the speed of rotation and the phase of the main screw by means of suitable transducers (146) associated with the motor (46) which actuates said screw and the carousel served by it, the whole being designed so that, when necessary, the motor of the auxiliary screw is first decelerated, possibly passing through zero velocity or without stopping, after which the same motor is accelerated to cause the auxiliary screw to rotate at the same speed and in phase with the main screw, the whole so as to avoid sudden relative movements between the bottles and the auxiliary screw, with the disadvantages which derive from this state.

2. Device according to Claim 1, characterized in that the auxiliary screw (205-2500) is actuated by a brushless motor (47) of one of equivalent type-and the kinematic chain which actuates the working carousel and the main screw (105-1500) it controls, is actuated by any suitable electric motor (46) equipped with speed and phase transducers.

3. Device according to Claim 1, characterized in that, when it is used in feeding bottles to a group of carousels intended for filling, for checking the tare and gross weight and for corking the same bottles, for which it is necessary to create cyclically a space in the thread of the main screw (105), the electronic means (50-51-52-53) which control the functioning of the motor (47) of the auxiliary screw (205) are such that said screw slows down and subsequently reaccelerates, without passing through zero velocity and in such a manner that the same auxiliary screw is dephased by one complete revolution every two revolutions of the main screw and resumes, at the end of these two revolutions, the speed and the phase of the same main screw.

4. Device according to Claim 1, characterized in that, when it is used for controlling the flow of bottles leaving a working carousel (54), for example the corking carousel, means are provided so that, when a defective bottle has to be removed from said flow, the auxiliary screw (2500) is decelerated and possibly stopped when the defective bottle arrives in the region thereof, which bottle is first shifted towards the outside by the thread of the helix of the main screw (1500) and then by the thrust of the next bottle which forces the same defective bottle to leave the guide channel (62) laterally and to enter a removal channel (58) where the same bottle is then retained by suitable means (60-61) to function as a side for controlling the successive flow of bottles when the auxiliary screw (2500) starts rotating again in synchronism and in phase with the main screw, the whole being designed in order to be able to divert possible defective bottles onto a transport line (59) alongside that (55) for discharging the correctly filled and closed bottles.

5. Device according to the preceding claims, in which the main screw (105, 1500) and the auxiliary screw (205-2500) are supported by coaxial shafts (18-23), the hollow external one of which is supported rotatably by an arm (16) mounted with the possibility of oscillating on a tube (12) parallel to said screws and in turn supported in a cantilevered manner by a hollow vertical column (10), in which there are accommodated the positive movement transmissions (44-45) positioned end to end with a pair of shafts (14-42) which are arranged coaxially and are rotatable in said tube and project with the other end into an opening of said arm (16), where, by means of other positive movement transmissions (40-41), they transmit the rotation to said coaxial shafts of the screws, elastic means (35) being provided for stressing the arm with the screws in the direction of the guide channel (3-62) in which the bottles flow, which is defined at the bottom by a guide (33) fixed in a cantilevered manner to said hollow column (10), and there resting against an end part of said guide the end of a push rod (36) screwed into said arm, by acting on which it is possible to vary the distance between the screws and said guide channel in order to adapt it to different sizes of bottle.

6. Device according to the preceding claims, in which the push rod (36) mounted on the arm (16) which bears the screws and which rests against a fixed reaction point (133), in order to maintain the same screws at the desired distance from the flow channel of the bottles, interacts directly or indirectly with a sensor (39) which notes and signals any shifts of the screws from said channel in the presence of jams or problems in the advance of the bottles which may possibly have to require stopping of the working carousels.

7. Device according to the preceding claims, in which the screws (105-1500 and 205-2500) are equipped with respective longitudinal and internal splines which interact with wedging keys (19-26) borne by the relative actuating shafts (18-25-23), the main screw (105-1500) being retained axially on the relative hollow shaft (18) by a ring nut (21) screwed onto the free end section (20) of the core of said screw, while the auxiliary screw (205-2500) is retained axially on the relative shaft (23-25) by one or more projections (30) projecting radially from said shaft and interacting with an internal annular recess (31) of the core of the screw and pushed outwards by the inclined head (128) of a push button (28) which projects axially from said shaft and which is stressed towards the outside by a spring (29), so that, by pressing said push button, said projections (30) are neutralized and it is possible to slip off the auxiliary screw, all in order to simplify the replacement of the screws to adapt to the range of sizes of the bottles being processed.
